# FASCICULE DE BREVET EUROPEEN

(11) **EP 2 107 723 B1**
(45) Date de publication et mention de la délivrance du brevet: **08.05.2013**
(21) Numéro de dépôt: 09157004.4
(22) Date de dépôt: 31.03.2009
(51) Int. Cl.: H04L 12/28

(54) **Commande d'un dispositif a distance par un terminal**
Fernsteuerung einer Vorrichtung durch ein Endgerät
Remote control of a device by a terminal

(30) Priorité: 31.03.2008 FR 0852114
(43) Date de publication de la demande: 07.10.2009
(73) Titulaire: FRANCE TELECOM, 75015 Paris (FR)
(72) Inventeur: Richard, Hervé, 94600, CHOISY LE ROI (FR); Murphy, Vincent, 59110 La Madeleine (FR); Agro, Roberto, 92120 Montrouge (FR)
(74) Mandataire: Cabinet Plasseraud

(56) Documents cités:
- US-A1- 2006 259 183

## Description

La présente invention concerne le domaine de la gestion de dispositifs localisés à distance, comme dans un lieu d'habitation par exemple.

On connait des systèmes qui offrent la possibilité de commander et/ou de gérer des dispositifs électroniques à distance au sein d'un même réseau, sur la base du protocole de commande d'équipement standardisé UPnP (pour Universal Plug and Play') défini par l'UPnP forum. Un tel système est par exemple décrit dans le document US 2006/259183.

De tels systèmes comprennent en général une pluralité de dispositifs qui fournissent un service à un potentiel utilisateur et au moins un point de commande destiné à commander cette pluralité de dispositifs à distance.

Plus précisément, une architecture selon UPnP est celle d'une plateforme distribuée offrant des services dynamiques via des périphériques qui communiquent, comme par exemple une imprimante, une télévision, un lecteur de DVD, ou encore des volets déroulants. Elle permet ainsi notamment la mise en réseau poste à poste d'ordinateurs personnels et d'équipements périphériques de manière automatique.

UPnP définit des protocoles réseau permettant, de manière automatique, la détection et le retrait dynamique de tels équipements périphériques, l'utilisation par les points de commande des services qu'ils fournissent et la notification des changements de valeurs de variables d'état associées aux dispositifs ou aux services. Ces protocoles s'appuient notamment sur le protocole XML (pour 'extensible Markup Langage'), HTTP (pour 'Hyper Text Transfer Protocol'), TCP (pour transmission Control Protocol') et UDP (pour 'User data Protocol').

Dans une telle architecture, il est alors prévu de pouvoir commander ces équipements mis en réseau. Ainsi, par exemple, un ordinateur personnel peut commander une imprimante.

Toutefois, il convient de préciser qu'une telle mise en réseau de dispositifs à commander et d'une ou plusieurs entités de commande adaptées pour les commander repose sur la couche protocolaire UPnP installée sur tous les dispositifs et entités de commande pouvant communiquer entre eux dans un tel réseau.

La présente invention vise à améliorer la situation.

Un premier aspect de la présente invention propose un procédé de commande d'au moins un dispositif appartenant à un premier réseau, à partir d'un terminal apte à communiquer au travers d'un second réseau au moyen d'un protocole de communication;
ledit dispositif étant adapté pour mettre en oeuvre au moins une application apte à être commandée à distance à travers le premier réseau, par une entité de commande connectée au premier réseau, au moyen d'un protocole de commande;
ledit procédé comprenant les étapes suivantes, mises en oeuvre par une entité réseau reliant lesdits premier et second réseaux :
/1/ recevoir, en provenance du terminal, un message de commande conforme audit protocole de communication, le message de commande n'étant pas conforme audit protocole de commande ;
/2/ traduire ledit message de commande en un message de commande traduit conforme audit protocole de commande et adapté pour commander ladite application;
/3/ émettre, à destination de ladite entité de commande, le message de commande traduit.

Le premier réseau peut correspondre à un réseau adapté pour supporter un protocole de commande de type UPnP dans lequel une pluralité de dispositifs, pouvant mettre en oeuvre une pluralité d'applications, pour éventuellement offrir respectivement des services, peuvent être commandés par une ou plusieurs entités de commande.

Un dispositif à commander à distance selon un mode de réalisation de la présente invention, comprend une application qui peut être mise en oeuvre sur commande à distance. Par la suite, à titre illustratif, on considère qu'à une telle application peut correspondre l'offre d'un service.

Le second réseau peut correspondre à un quelconque réseau de communication, comme notamment un réseau de télécommunications mobile, ou encore un réseau WiFi. Ce second réseau peut, contrairement au premier réseau, ne pas être un réseau de type UPnP. Plus précisément, le second réseau comprend des dispositifs qui ne sont pas adaptés pour des actions UPnP, contrairement aux dispositifs du premier réseau.

Le terminal qui est adapté pour commander un dispositif du premier réseau peut correspondre alors avantageusement à un terminal mobile. Dans ce cas, un utilisateur d'un terminal mobile peut commander le fonctionnement d'un dispositif situé à distance dans le premier réseau sans pour autant que ce terminal ne dispose d'une couche protocolaire de type UPnP. On peut ainsi par exemple envisager qu'un utilisateur programme la température de son lieu d'habitation à partir de son téléphone mobile, si son lieu d'habitation est équipé d'un réseau de type UPnP.

Un dispositif à commander dans le premier réseau peut être, tel que cela est défini dans l'architecture UPnP, de type DMS (pour 'Digital Media Server' en anglais) qui est un serveur distribuant des contenus numériques dans ce premier réseau UPnP ; ou encore de type DMR (pour 'Digital Media Renderer' en anglais) qui est un dispositif en charge de restituer un contenu multimédia.

Le second réseau peut correspondre à un réseau de type quelconque, dans lequel le terminal du second réseau peut être un terminal fixe ou mobile. Il convient de noter que la présente invention trouve avantageusement à s'appliquer lorsque le terminal considéré dans le second réseau n'est ni configuré ni adapté pour communiquer au moyen du protocole de commande qu'il est prévu de mettre en oeuvre dans le premier réseau.

Grâce à ces dispositions, on peut mettre en oeuvre la commande à distance d'un dispositif qui est au sein d'un réseau et qui met en oeuvre une application adaptée pour être commandée au moyen du protocole de commande UPnP, sans toutefois requérir l'installation d'une application spécifique de type UPnP sur le terminal considéré pour la mise en oeuvre d'un protocole de commande utilisé au sein du premier réseau. En effet, grâce à l'entité réseau qui reçoit les messages de commande émis par le terminal, ce dernier peut communiquer avec le dispositif à commander.

Cette entité réseau permet à n'importe quel équipement, tel qu'un terminal mobile, un ordinateur personnel, une télévision, de commander à distance un dispositif au travers de n'importe quel second réseau, qui peut être un réseau local, basé sur le protocole WiFi, ou encore Ethernet ou encore un réseau distant basé sur le protocole Internet, réseau de communication mobile, sans qu'il soit requis que cet équipement dispose d'un module de communication spécifique, utilisant un protocole spécifique.

Une telle commande peut permettre de commander à la fois des applications relatives à des services sur le modèle du "pousser" ou encore "push model", et des services sur le modèle du "tirer" ou encore "pull model", en ce qui concerne des données audio ou vidéo.

Au niveau de l'entité réseau, on peut en outre prévoir de mettre en oeuvre les étapes suivantes :
/i/ recevoir un message d'information conforme au protocole de commande contenant une information relative au dispositif depuis ledit dispositif ;
/ii/ traduire ledit message d'information en un message d'information traduit conforme au protocole de communication ; et
/iii/ émettre à destination du terminal le message d'information traduit.

Grâce à ces caractéristiques, il est alors possible d'informer le terminal sur certains aspects du dispositif qu'il est en mesure de commander. Ainsi, on peut prévoir de transmettre les changements d'états du dispositif au terminal. On peut également envisager avantageusement que le terminal reçoive ainsi les informations initiales requises pour lui permettre de commander ce dispositif. Tel peut être le cas notamment, lorsque le premier réseau est un réseau UPnP et que la détection de nouveau dispositif connecté dans ce réseau est faite de manière dynamique. Dans ce cas, l'entité de commande reçoit des informations sur le nouveau dispositif connecté et peut ainsi les transmettre à l'entité réseau qui elle-même est en mesure de les transmettre au terminal.

Le premier réseau peut être un réseau UPnP, le protocole de commande étant alors le protocole UPnP.

Le terminal peut être un terminal mobile ou encore un terminal fixe, de type ordinateur personnel par exemple.

Un deuxième aspect de la présente invention propose un procédé de commande d'au moins un dispositif appartenant à un premier réseau, à partir d'un terminal apte à communiquer au travers d'un second réseau au moyen d'un protocole de communication ;
lesdits premier et second réseaux étant reliés via une entité réseau ;
ledit dispositif mettant en oeuvre au moins une application apte à être commandée à distance à travers le premier réseau, par une entité de commande connectée au premier réseau, au moyen d'un protocole de commande ;
ledit procédé comprenant les étapes suivantes au niveau de ladite entité de commande :
/1/ recevoir un message de commande conforme audit protocole de commande depuis l'entité réseau ;
/2/ émettre un message de commande conforme au protocole de commande adapté pour commander ladite au moins une application sur le dispositif.

Un troisième aspect de la présente invention propose une entité réseau adaptée pour mettre en oeuvre un procédé de commande selon le premier aspect de la présente invention.

Un quatrième aspect de la présente invention propose une entité de commande adaptée pour mettre en oeuvre un procédé de commande selon le deuxième aspect de la présente invention.

Un cinquième sixième aspect de la présente invention propose un système de commande d'un dispositif comprenant une entité réseau selon le troisième aspect de la présente invention et une entité de commande selon le quatrième aspect de la présente invention.

Un sixième aspect de la présente invention propose un programme d'ordinateur destiné à être installé dans une entité réseau selon le troisième aspect de la présente invention, comprenant des instructions aptes à mettre en oeuvre le procédé selon le premier aspect de la présente invention, lors d'une exécution du programme par des moyens de traitement de l'entité réseau.

Un septième aspect de la présente invention propose un programme d'ordinateur destiné à être installé dans une entité de commande selon le quatrième aspect de la présente invention, comprenant des instructions aptes à mettre en oeuvre le procédé selon le deuxième aspect de la présente invention, lors d'une exécution du programme par des moyens de traitement de l'entité de commande.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre selon un mode de réalisation de l'art antérieur ;
- la figure 2 illustre un échange de messages entre un terminal, une entité réseau reliant les premier et second réseaux, une entité de commande du premier réseau et un dispositif à commander selon un mode de réalisation de la présente invention ;
- la figure 3 illustre une architecture selon un mode de réalisation de la présente invention ;
- la figure 4 illustre un échange de messages dans une architecture selon un mode de réalisation de la présente invention ;
- la figure 5 illustre des échanges de messages dans une architecture selon un mode de réalisation de la présente invention ;
- la figure 6 illustre une architecture selon un mode de réalisation de la présente invention ; et
- la figure 7 illustre une architecture d'une entité réseau, d'une entité de commande et d'un terminal selon un mode de réalisation de la présente invention.

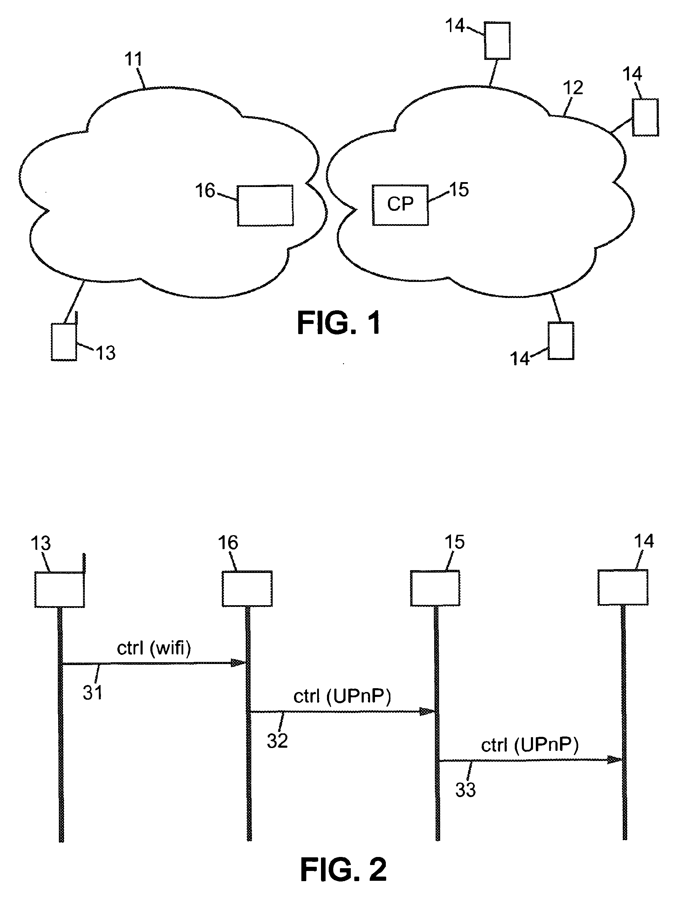

La figure 1 illustre une architecture réseau selon un mode de réalisation de la présente invention. Cette architecture est fondée sur un premier réseau 12 dans lequel est situé au moins un dispositif 14 pouvant être commandé à partir d'un point de commande 15, une entité réseau 16 reliant le premier réseau avec un second réseau 11.

Ce premier réseau 12 comprend une pluralité de dispositifs à commander 14 par l'entité de commande 15 au moyen de commandes conformes à un protocole de commande de type UPnP ou équivalent. Le premier réseau 12 peut également comprendre plusieurs entités de commande 15. Chaque entité peut être reliée à une autre entité dans ce premier réseau soit par une liaison filaire, par exemple de type Ethernet, soit encore par une liaison sans fil, comme par exemple par une liaison de type WiFi.

Dans un mode de réalisation de la présente invention, une entité de commande 15 met en oeuvre une interface de communication avec l'entité réseau 16, et un module de commande des dispositifs 14 utilisant le protocole UPnP.

Dans ce premier réseau 12, les dispositifs 14 à commander peuvent être de tout type tel que par exemple tout périphérique informatique comme une imprimante, ou encore un poste de télévision ou un lecteur de DVD.

Une entité de commande 15 adaptée pour commander un dispositif 14 de ce premier réseau peut être localisée physiquement n'importe où dans ce premier réseau. Ainsi, on peut prévoir de l'intégrer dans un des dispositifs 14 ou bien encore on peut prévoir une entité de commande distincte des dispositifs 14. Dans ce dernier cas, l'entité de commande peut résider dans un ordinateur personnel et le ou les dispositifs à commander sont des périphériques que cet ordinateur peut utiliser et donc commander.

Le protocole UPnP prévoit une première phase de 'découverte' (ou 'discovery' en anglais). Quand un dispositif 14 se connecte au réseau 12 cette phase de découverte du protocole permet à ce dispositif de prévenir le ou les entités de commande 15 des applications, ou services, qu'il est en mesure d'offrir. Aucune limitation n'est attachée à la présente invention au regard du type de service qu'un dispositif 14 peut offrir, ou d'applications à commander qu'il est en mesure de mettre en oeuvre. Ces services peuvent notamment être relatifs à des photos, de la musique, de la vidéo, ou encore de la télévision. Cette phase de découverte permet également à une entité de commande 15 qui vient de se connecter au réseau 12 de découvrir les dispositifs 14 de ce réseau de manière automatique et transparente pour un utilisateur.

Cette phase est basée sur un échange, entre l'entité de commande 15 et le dispositif 14, d'informations relatives au dispositif 14 et aux services qu'il offre. Elle peut être fondée sur le protocole SSDP (pour 'Simple Service Discovery Protocol' en anglais), qui est un protocole de découverte automatique permettant aux dispositifs d'être identifiés par des entités de commande implémentant le protocole UPnP au moyen d'une diffusion générale UDP (en anglais, broadcast ou multicast UDP).

Puis, ultérieurement est mise en oeuvre une phase de description au cours de laquelle des informations plus détaillées sur le dispositif peuvent être récupérées par l'entité de commande 15. Ainsi, pour chaque service offert par un dispositif 14, une description associée inclut une liste de commandes ou d'actions auxquelles le service considéré répond, ainsi qu'une liste de variables qui décrivent respectivement les différents états que peut prendre ce service. Cette phase peut être fondée sur un protocole de type XML.

Suite à une phase de découverte, est mise en place une phase de commande. A ce stade, une entité de commande est en mesure de commander un dispositif puisqu'elle connait les actions qu'elle peut requérir auprès de lui, c'est-à-dire les commandes reconnues par ce dispositif.

Pour cette phase, on peut prévoir d'utiliser un protocole de type XML, ou de type SOAP pour ('Simple Object Access Protocol' en anglais).

Selon le protocole UPnP, il est également possible de recevoir au niveau de l'entité de commande 15 des notifications d'événement depuis les dispositifs 14 à commander. Ces notifications d'évènement servent à notifier à l'entité de commande 15 une mise à jour des variables relatives à un service en cours offert par un dispositif 14. Cette phase de notification peut se fonder sur un protocole de type XML comme GENA (pour 'General Event Notification Architecture')

Enfin, on peut aussi mettre en oeuvre dans un tel réseau 12 une phase de présentation au cours de laquelle une entité de commande 15 est en mesure de présenter une page de type URL (pour 'Uniform Resource Locator') qui est fournie par un dispositif 14. En procédant ainsi, un utilisateur peut commander le dispositif 14 considéré ou un état du dispositif 14 considéré au niveau de l'entité de commande 15.

Un terminal 13 appartenant au second réseau de communication 11 est adapté pour communiquer dans ce second réseau selon le protocole de communication sur lequel est basé ce réseau. En outre, dans un mode de réalisation de la présente invention, le terminal 13 dispose d'informations relatives à un dispositif 14 du premier réseau, qui lui permettent d'émettre des messages adaptés pour le commande, et l'utilisation, du dispositif 14 concerné. De telles informations peuvent avantageusement être obtenues de manière dynamique dans le réseau, par exemple au moyen d'un serveur DNS (Domain Name Serveur) ou encore au moyen d'une entité interrogeant les dispositifs raccordés au réseau pour détecter la présence d'une entité de commande d'équipement. A cet effet, on peut prévoir que l'entité réseau 16 soit adaptée pour recevoir de telles informations en provenance de l'entité de commande 15 selon le protocole UPnP, et pour les transmettre selon le protocole de communication du second réseau 11 au terminal 13. Disposant de telles informations, le terminal est en mesure d'utiliser le dispositif 14. Ces informations lui permettent non seulement d'identifier le dispositif 14, mais aussi de connaitre notamment les services que le dispositif 14 est en mesure d'offrir, ainsi que son état. Ces services sont par exemples des services de fourniture de contenu audio et/ou vidéo. Dans ce cas des informations seront également fournies sur les contenus accessibles (noms de fichiers, descriptifs des contenus, etc...) On peut prévoir de fournir au terminal 13 de manière dynamique de telles informations afin qu'il puisse disposer d'informations à jour.

Par ailleurs, il dispose d'une interface utilisateur qui propose à un utilisateur de ce terminal 13 de commander un dispositif 14 à commander. Les actions pouvant être appliquées à un dispositif 14, et donc offerte à un utilisateur via l'interface utilisateur du terminal 13, dépendent du type de dispositif 14 considéré. Ainsi, par type de dispositif 14, on peut prévoir que cette interface utilisateur propose un menu d'actions à requérir sur tel ou tel dispositif 14 du premier réseau.

Aucune limitation n'est attachée à la présente invention au regard de la méthode mise en oeuvre pour fournir au terminal 13 lesdites informations relatives au dispositif ou aux dispositifs 14 qu'il peut commander.

On peut prévoir que le terminal récupère ces informations préalablement à une communication dans le second réseau. Ainsi, par exemple, l'opérateur du second réseau peut offrir à un utilisateur un abonnement à un service de commande à distance via ce second réseau selon un mode de réalisation de la présente invention. Au moment de l'abonnement, l'utilisateur peut déclarer le ou les dispositifs du premier réseau qu'il souhaite pouvoir commander via le second réseau. A ce stade, les informations nécessaires pour la mise en oeuvre d'une telle commande peuvent alors être stockées sur le terminal 13.

On peut également prévoir que l'utilisateur configure lui-même ces informations sur son terminal 13.

Dans un autre mode de réalisation, les informations relatives à un dispositif 14 peuvent être reçues au niveau du terminal 13 par le second réseau comme détaillé dans une section suivante.

On peut également prévoir que le terminal 13 reçoive les informations du ou des dispositifs 14 qu'il peut commander dans le premier réseau 12 de manière dynamique via l'entité de commande 15 puis l'entité réseau 16.

Différentes combinaisons des modes de réalisation décrits ci-dessus peuvent également avantageusement et aisément mises en oeuvre.

La figure 2 illustre un échange de messages entre un terminal 13 du second réseau, une entité réseau 16 reliant les premier et second réseaux, une entité de commande 15 du premier réseau et un dispositif 14 à commander selon un mode de réalisation de la présente invention.

A ce stade, le dispositif 14 à commander est relié à l'entité de commande 15 qui dispose des informations requises relatives à ce dispositif 14 pour le commander et utiliser la ou les applications qu'il offre dans le premier réseau 12. Dans ce mode de réalisation, le premier réseau comprend des équipements adaptés pour être commandés au moyen du protocole UPnP dans le premier réseau.

Le second réseau peut être un réseau public ou encore un réseau privé. Il peut notamment correspondre à un réseau local utilisant des liaisons WiFi ou Bluetooth. Il peut correspondre également à un réseau étendu, par exemple Internet, utilisant par exemple le protocole IP comme protocole de communication ou tout autre protocole convenant pour envoyer un message à travers un réseau étendu.

En outre, dans le cas où le deuxième réseau est un réseau local sans fil, la couverture géographique de ce deuxième réseau est susceptible de comporter des zones géographiques communes avec la zone géographique de couverture du premier réseau. En d'autres termes, un terminal mobile peut être utilisé pour commander un équipement du premier réseau soit en utilisant un réseau local, soit en utilisant un réseau étendu interconnecté avec le premier réseau via l'entité réseau 16, les deux options étant utilisables au même moment lorsque le terminal mobile se situe dans la zone de couverture du réseau local et accède également au réseau étendu. Il est également possible que l'équipement à commander se situe lui-même dans la zone de couverture du deuxième réseau.

Le terminal 13 dispose des informations relatives au dispositif 14 à commander, mais, dans ce mode de réalisation, n'est pas apte à communiquer au moyen du protocole UPnP, n'étant pas équipé d'un module de communication utilisant ce protocole de commande. Il émet un message de commande 31 d'une application du dispositif 14 considéré selon le protocole de communication à destination de l'entité réseau 16.

Cette dernière est adaptée pour traduire ce message de commande 31 d'application du dispositif 14 en un message de commande 32 traduit conforme au protocole de commande UPnP et pour transmettre ce dernier message à l'entité de commande UPnP 15 du premier réseau.

Dans un mode de réalisation de la présente invention, les paramètres reçus dans le message de commande depuis le terminal, qui n'est pas UPnP, sont convertis en paramètres d'une action ou de plusieurs actions UPnP. On peut prévoir à cet effet une fonction de traduction spécifique par type de commande traitée. Dans un mode de réalisation, une commande portant un nom déterminé est traduite en appliquant une fonction de traduction associée à ce nom, pour obtenir une commande UPnP portant le même nom et déclenchant une ou plusieurs actions UPnP.

L'entité de commande est ensuite apte à transmettre ce message de commande au dispositif 14 considéré sous la forme d'un message de commande 33.

Dans un mode de réalisation de la présente invention, un utilisateur du terminal 13 est en mesure de récupérer des contenus stockés dans un répertoire au niveau d'un dispositif 14. Dans ce contexte, le dispositif 14 est de type DMS, l'entité de commande UPnP 15 est de type DMC (pour 'Digital Media Controller' en anglais) ou encore 'Control Point UPnP', l'entité réseau 16 est de type DMCP ('Digital Media Controller Proxy' en anglais). L'entité réseau 16 DMCP peut être qualifiée d'entité mandataire ou encore entité proxy car il sert d'intermédiaire entre le terminal 13 et l'entité de commande DMC 15. En effet, il transmet notamment des commandes à ce dispositif de commande 15, ces commandes étant fonction de ce qui est spécifié dans les messages émis par le terminal 13. Ainsi, l'entité de réseau 16 DMPC est en quelque sorte mandatée par le terminal pour l'envoi de commandes que le terminal n'est pas apte à envoyer lui-même. Elle peut donc être qualifiée de dispositif 'proxy', en ce que, de par la présence d'un module de traduction, elle sert d'intermédiaire entre le terminal et l'entité de commande DMC 15. Elle transmet notamment des commandes à l'entité de commande selon ce qui lui est spécifié par requête par le terminal. Elle est ainsi mandatée par le terminal pour l'envoi de commandes que le terminal n'est pas apte à envoyer lui-même. Réciproquement, elle sert d'intermédiaire pour les réponses ou messages émis par l'entité de commande UPnP à destination du terminal. Dans ce but, l'entité réseau met en oeuvre les éventuelles traductions ou adaptations protocolaires nécessaires pour que l'entité destinatrice des messages - le terminal 13 ou l'entité de commande DMC - reçoive des messages formatés conformément à un protocole supporté par ces derniers.

Dans le mode de réalisation considéré ici, le terminal 13 est adapté pour émettre des messages de commande 31 selon un protocole de type XML-RPC (pour 'eXxtensible Markup Language-Remote Procedure Call' en anglais).

Le terminal 13 émet à destination de l'entité réseau 16 un message selon le protocole XML-RPC de type :
browseContent (mediaServerUDN, container ID).

Puis, sur réception de ce message, l'entité réseau 16 transmet à l'entité de commande 15 un message de commande selon une procédure d'envoi de message appropriée, par exemple par des appels de fonctions, entre l'entité réseau 16 et l'entité de commande 15, ce message de commande étant du type suivant :
browseContent (mediaServerUDN, container ID).

Ainsi, le message obtenu est un message adapté pour le protocole UPnP. En effet, il correspond ici à une action UPnP, déclenchée en utilisant le protocole SOAP ('Simple Object Access Protocol' en anglais). Ce protocole permet la transmission de messages entre entités distantes implémentées sous forme d'objets (au sens de la programmation objet): il permet en effet à un objet d'invoquer des méthodes d'un autre objet, c'est-à-dire de déclencher l'exécution par cet autre objet de fonctions ou actions.

Par conséquent, l'entité de commande 15 reçoit le message ci-dessus et le transmet via une action UPnP à un dispositif 14, en utilisant le protocole SOAP. Plus précisément, dans un mode de réalisation, l'entité réseau 16 DMCP déclenche un appel de fonction pour que l'entité de commande 15 invoque, en utilisant le protocole SOAP, l'exécution par le dispositif 14 d'une ou plusieurs actions UPnP. Par exemple, l'action UPnP invoquée peut être la suivante :
Browse (containerID, "BrowseDirectChildren", "*",0,0, "").

Puis, le dispositif 14 émet à destination de l'entité de commande 15, une réponse à l'action UPnP précédente, qui est transmise à l'entité réseau 16 selon la procédure d'appel utilisée entre l'entité de commande et l'entité réseau. Cette dernière traduit ce message de réponse pour le transmettre via le protocole XML-RPC au terminal 13.

Dans un autre mode de réalisation de la présente invention, on peut également prévoir de lancer la lecture d'un contenu. Ici, le terminal 13 peut offrir une interface Homme-Machine, qui permet à son utilisateur de choisir un contenu à exécuter/lire sur un dispositif 14 de type DMR. Dans ce contexte, le terminal 13 envoie à l'entité réseau 16 un message via le protocole XML-RPC de type :
playContent(DMR, contentURI)

L'entité réseau 16 le traduit sous la forme d'un message compatible avec le protocole UPnP. Puis, l'entité réseau 16 transmet ce message adapté à l'entité de commande 15. Plus précisément, cet envoi de message est réalisé sous la forme d'un appel de fonction. Ainsi, l'entité réseau traduit le message reçu en appel de fonctions sur l'entité de commande. Cette dernière transmet alors au dispositif 14 un message de type suivant, qui correspond à une action UPnP :
setAVTransportURI(InstanceID=0, currentURI=contentURI, CurrentURIMetadata="")

Le dispositif 14 y répond par un message de type:
setAVTransportURI response

L'entité de commande peut alors requérir que soit lu le contenu requis en transmettant au dispositif 14 un message de type :
play(InstanceID=0, Speed=1)

Ensuite, le dispositif 14 y répond en émettant un message de réponse selon le protocole UPnP.

Puis, l'entité de commande transmet, via la procédure d'appel entre ces entités réseau et de commande, un message à l'entité réseau de type :
playcontent response OK

Puis, l'entité réseau DMCP 16 transmet au terminal 13 un message via le protocole XML-RPC de type :
playContent Response OK

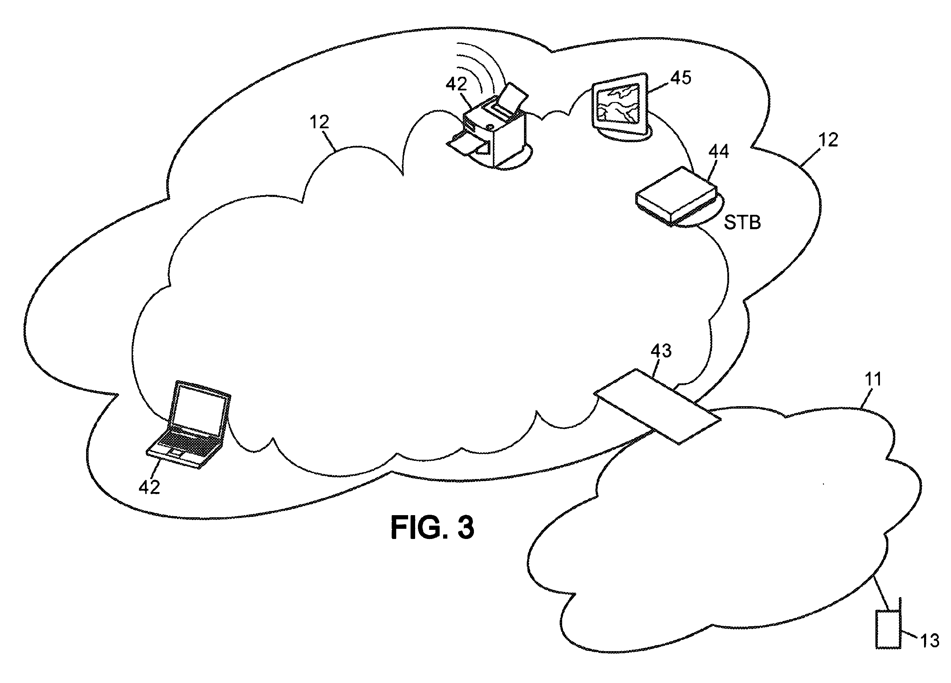

La figure 3 illustre une architecture selon un mode de réalisation de la présente invention. Le premier réseau 12 est un réseau privé de type UPnP qui comprend un boitier décodeur 44 (ou 'STB' pour 'Set Top Box' en anglais), une télévision 45, une imprimante 42, un ordinateur 41 et un boitier d'interface pour ligne d'abonné numérique (ou boitier DSL pour 'Digital Subscriber Line') 43. Ce boitier d'interface 43 peut correspondre à une passerelle Internet UPnP, ou encore IGD (pour 'Internet Gateway Device').

Une telle passerelle IGD peut en outre être adaptée pour fournir un service de traduction d'adresse réseau (ou NAT pour 'Network Address Translation') Grâce à ce service, plusieurs dispositifs 14 du premier réseau UPnP peuvent bénéficier d'une connexion unique pour accéder au réseau IP en utilisant la même adresse publique IP.

L'entité de commande 15 peut ici être intégrée dans l'ordinateur 41 ou encore dans le boitier DSL 43.

Ainsi, tous les autres dispositifs peuvent être détectés automatiquement par l'entité de commande 15 selon le protocole UPnP et les services rendus respectivement par tous ces dispositifs peuvent alors être disponibles au niveau de cette entité de commande. Si on prévoit, par exemple, d'intégrer l'entité de commande dans l'ordinateur 41, alors l'imprimante 42 peut être reliée à ce dernier via une liaison de type WiFI et les autres dispositifs 43 à 45 peuvent eux lui être reliés par une liaison filaire, par exemple de type Ethernet. Aucune limitation n'est attachée à la présente invention au regard du type de liaison physique entre l'ordinateur et les dispositifs de ce premier réseau.

Ainsi, une liaison d'un type quelconque, filaire ou WiFI, relie l'ordinateur 41 et le boitier DSL 43. Dans ce mode de réalisation de la présente invention, le boitier DSL 43 est un point d'accès WiFi d'un réseau WiFi (ou 'Internet Gateway Device' en anglais).

Ici, on peut prévoir que le second réseau est un réseau de type WiFi. Le terminal 13 est alors un terminal ayant une interface WiFi et peut donc se connecter au boitier DSL 43.

Dans un tel réseau, l'entité de commande 15 peut donc être avantageusement située au niveau de l'ordinateur 41 ou du boitier DSL 43, et l'entité réseau 16 selon un mode de réalisation de la présente invention peut elle être située au niveau du boitier DSL 43, recevant ainsi les messages de commande du terminal 16, les traduisant de manière à ce qu'ils soient conformes au protocole UPnP pour ensuite les transmettre dans le premier réseau 12 UPnP.

Ainsi, l'utilisateur d'un terminal mobile WiFi est en mesure de commander le volume du son du poste de télévision 45 dans une telle architecture, sans qu'il soit requis l'installation d'un module de communication mettant en oeuvre la couche protocolaire UPnP sur le terminal mobile qu'il utilise.

De façon similaire, on peut envisager aisément de mettre en oeuvre l'entité réseau 16 au niveau de n'importe quel type d'interface entre le premier réseau et le second réseau. On peut ainsi prévoir, à la place du boitier DSL, de placer l'entité de commande 16 au niveau d'un serveur du second réseau 11.

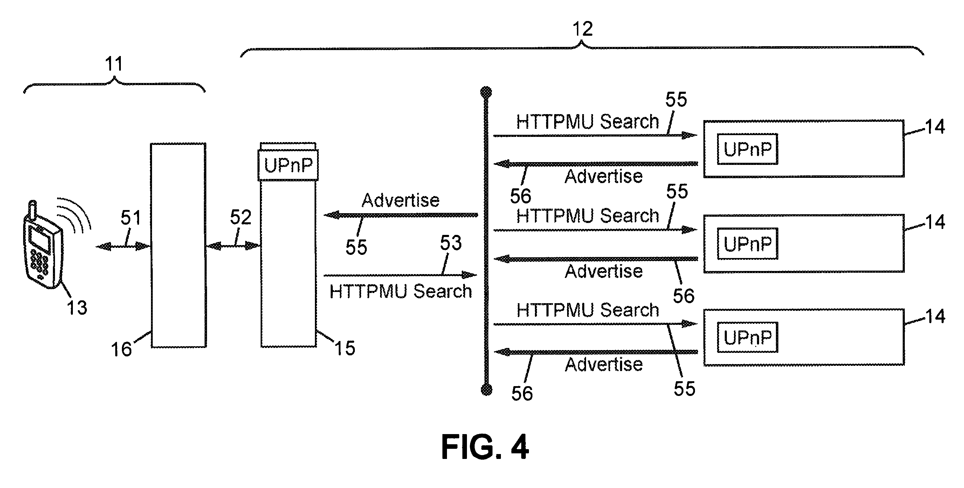

La figure 4 illustre un échange de messages dans une architecture selon un mode de réalisation de la présente invention. Un tel échange de messages peut être mis en oeuvre quelque soit le type d'équipement de réseau au niveau duquel est installé l'entité de commande 16.

L'entité de commande 15 dans le premier réseau UPnP est adaptée pour découvrir les dispositifs 14 à commander présents dans ce réseau. A cet effet, elle émet un message de découverte 53 de type HTTPMU (pour 'Hypertext Transport Protocol MUlticast' en anglais), c'est-à-dire un message multidiffusion, ou encore multicast, dans le réseau 12.

Elle reçoit en réponse des messages de type 'advertise' 55 l'informant à propos des services offerts respectivement par les différents dispositifs 14 du premier réseau 12. Il convient de noter, qu'un dispositif 14 nouvellement connecté au réseau 12 peut lui aussi émettre des messages de type HTTPMU de sorte à déterminer une entité de commande lui correspondant.

Une fois que l'entité de commande 15 dispose d'informations sur un dispositif 14 et sur le ou les services que ce dernier offre, elle est alors en mesure de commander ce dispositif 14 et de recevoir des messages de commande, visant à commander ce dispositif, depuis l'entité réseau 16, quelque soit la localisation de cette dernière.

Afin que le terminal 13 puisse recevoir des informations relatives à un dispositif 14 ou plusieurs dispositifs 14, on peut prévoir que l'entité de commande 15 et l'entité réseau 16 échangent de telles informations préalablement à toute commande depuis le terminal 13.

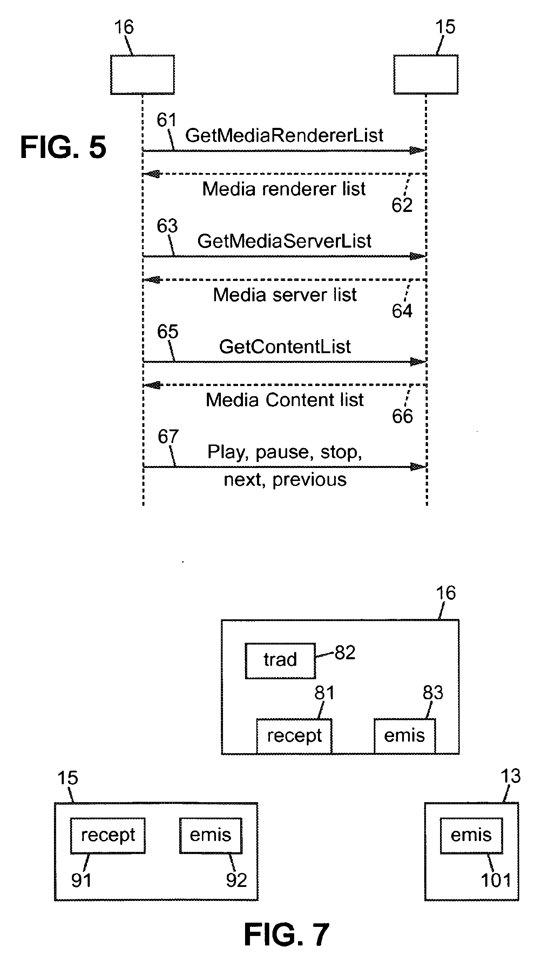

Un tel échange de messages 52 entre l'entité réseau 16 et l'entité de commande UPnP 15 est illustré en détail à la figure 5 selon un mode de réalisation de la présente invention.

L'entité de commande 15 reçoit un message 61 'GetMediaRedenderList' depuis l'entité de commande 16. L'entité de commande 15 répond à ce message en fournissant la liste des dispositifs 14 de type DMR dans un message 'Media renderer list' 62.

L'entité de commande 15 reçoit un message 63 'GetMediaServerList' depuis l'entité de commande 16. L'entité de commande 15 répond à ce message en fournissant la liste des dispositifs 14 de type DMS dans un message 'Media server list' 64.

L'entité de commande 15 reçoit un message 65 'GetContentList' depuis l'entité de commande 16. L'entité de commande 15 répond à ce message en fournissant la liste des contenus numériques qui peuvent être fournis à partir du réseau UPnP 12, dans un message 'Media content list' 66.

Disposant de ces informations, l'entité réseau 16 peut transmettre alors des commandes 67 ou messages de commande de type 'Play', 'Pause', 'Stop', 'Next', 'Previous'.

On peut ici prévoir que le terminal reçoive depuis l'entité réseau 16 de telles informations relatives aux dispositifs 14 qu'il est autorisé à commander via un échange de message 51.

Quelque soit la méthode mise en oeuvre pour fournir au terminal 13 les informations relatives aux dispositifs à commander 14, à ce stade le terminal est en mesure d'émettre des messages de commande selon un mode de réalisation. On peut prévoir que le terminal 13 émet un message de commande à destination de l'entité réseau 16.

Lorsque le second réseau 11 est un réseau cellulaire de télécommunication mobile GSM (pour 'Global System for Mobile communications' ou UMTS (pour 'Universal Mobile Telecommunication System') par exemple, l'entité réseau est alors adaptée pour convertir un message de commande reçu depuis le terminal 13 conforme au protocole GSM ou UMTS en un message de commande conforme au protocole UPnP à émettre à destination de l'entité de commande 15. Les messages émis par le terminal 13 dans le second réseau 11 peuvent correspondre aux messages d'une API XML (pour 'Application Programming Interface extensible Markup Langage') dont est alors pourvu le terminal 13 et l'entité réseau 16. Ces messages de commande peuvent alors être du type 'SetMute' ou encore SetVolume'.

A ce stade, seuls les dispositifs 14 pour lesquels une phase de découverte a été mise en oeuvre peuvent être contrôlés depuis le terminal 13.

On peut prévoir qu'une mise à jour des informations au niveau de l'entité réseau 16 soit effectuée automatiquement lorsque l'entité de commande 'découvre' un nouveau dispositif 14 à commander ou encore une nouvelle application, éventuellement pour un nouveau service offert par un dispositif 14 du premier réseau.

Dans un mode de réalisation de la présente invention, le terminal 13 est un ordinateur pourvu d'un navigateur HTML (pour 'Hyper Text Markup Langage'), l'entité réseau 16 correspond à un serveur WEB pourvu d'une API XML. Dans ces conditions, les messages 51 sont échangés selon le protocole HTTP (pour 'Hyper Text Transfer Protocol'), et les messages 52 sont échangés selon le protocole XML-RPC (pour 'eXtensible Markup Langage-Remote Procedure Call').

Il est également possible de prévoir que le terminal 13 accueille un client incorporé (ou 'embedded client' en anglais) adapté pour coopérer avec une interface de programmation XML (ou 'API XML' pour 'Application Programming Interface XML') située sur l'entité réseau 15.

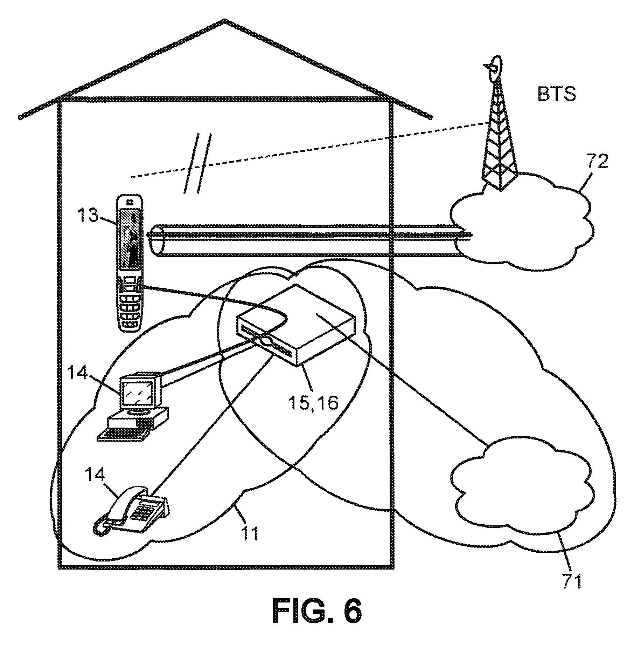

La figure 6 illustre une architecture selon un mode de réalisation de la présente invention. Le terminal 13 est à la fois adapté pour opérer dans un réseau WiFi, dans un réseau UMA (pour 'Unlicenced Mobile Access') et dans un réseau de communication mobile de type GSM ou encore UMTS par exemple. Ici, le premier réseau 11 comprend deux dispositifs 14 sous la forme d'un ordinateur et d'un téléphone fixe. L'entité de commande 15 et l'entité réseau 16 sont intégrées dans une même entité dans ce mode de réalisation.

Le terminal 13 est également adapté pour communiquer via le réseau de communication mobile 72. Il est aussi adapté pour accéder à un réseau de type IP 71 via l'entité 15,16 qui correspond à une passerelle de réseau entre un réseau UPnP et un réseau IP, qui n'est pas un réseau UPnP.

Dans un mode de réalisation de la présente invention, on prévoit de limiter la commande de dispositifs 14. A cet effet, on peut envisager de n'autoriser le commande d'un dispositif 14 qu'à une liste limitée d'utilisateurs, sur la base par exemple d'un identifiant de compte d'abonné de ligne numérique (ou 'xDSL account' en anglais). Dans ce cas, on peut prévoir qu'on requiert auprès de l'utilisateur du terminal 13 son identifiant avant de l'autoriser à exercer une commande d'un dispositif 14. Il est ainsi possible de limiter la possibilité de commander les dispositifs 14 d'un réseau 11 correspondant à un lieu d'habitation aux personnes habitant ce lieu.

On peut également prévoir de limiter la possibilité de commander un dispositif 14 sur la base de l'adresse MAC (pour 'Media Access Control' en anglais) du terminal lui-même.

Cette limitation de commande des dispositifs 14 peut être basée sur un abonnement préalable du terminal 13 auprès de l'entité de commande 15 via l'entité réseau 16. Cet abonnement peut correspondre à un abonnement à un réseau d'adresses IP de groupe multi diffusion, ou multicast.

La figure 7 illustre une architecture d'une entité réseau, d'une entité de commande et d'un terminal selon un mode de réalisation de la présente invention.

L'entité réseau 16 peut comprendre une unité de réception 81 adaptée pour recevoir un message de commande 31 conforme au protocole de communication depuis le terminal, le message de commande n'étant pas conforme au protocole de commande ; ainsi qu'une unité de traduction 82 adaptée pour traduire ledit message de commande conforme au protocole de communication en un message de commande 32 traduit conforme au protocole de commande adapté pour commander l'application, et une unité d'émission 83 adaptée pour émettre à destination de l'entité de commande le message de commande traduit.

L'unité de réception 81 peut en outre être adaptée pour recevoir un message d'information conforme au protocole de commande contenant une information relative au dispositif 14 depuis le dispositif, l'unité de traduction 82 peut en outre être adaptée pour traduire le message d'information en un message d'information conforme au protocole de communication ; et l'unité d'émission 83 peut en outre être adaptée pour émettre à destination du terminal 13 le message d'information conforme au protocole de communication.

L'entité de commande 15 peut comprendre une unité de réception 91 adaptée pour recevoir un message de commande 32 conforme au protocole de commande depuis l'entité réseau 16 ; et une unité d'émission 92 adaptée pour émettre un message de commande 33 conforme au protocole de commande adapté pour commander l'application sur le dispositif.

Le terminal 13 peut comprendre une entité d'émission 101 adaptée pour émettre un message de commande conforme au protocole de communication à destination de l'entité réseau 16 pour commander le dispositif dans le premier réseau.

## Revendications

1. Procédé de commande d'au moins un dispositif (14) appartenant à un premier réseau (12), à partir d'un terminal (13) apte à communiquer au travers d'un second réseau (11) au moyen d'un protocole de communication;
ledit dispositif étant adapté pour mettre en oeuvre au moins une application apte à être commandée à distance à travers le premier réseau, par une entité de commande (15) connectée au premier réseau, au moyen d'un protocole de commande;
ledit procédé comprenant les étapes suivantes, mises en oeuvre par une entité réseau (16) reliant lesdits premier et second réseaux :
/1/ recevoir, en provenance du terminal, un message de commande (31) conforme audit protocole de communication, le message de commande n'étant pas conforme audit protocole de commande ;
/2/ traduire ledit message de commande en un message de commande (32) traduit conforme audit protocole de commande et adapté pour commander ladite application;
/3/ émettre, à destination de ladite entité de commande, le message de commande traduit.

2. Procédé de commande selon la revendication 1, comprenant en outre les étapes suivantes au niveau de l'entité réseau (16) :
/i/ recevoir un message d'information conforme au protocole de commande contenant une information relative au dispositif (14) depuis ledit dispositif ;
/ii/ traduire ledit message d'information en un message d'information traduit conforme au protocole de communication ; et
/iii/ émettre à destination du terminal (13) le message d'information traduit.

3. Procédé de commande selon la revendication 1 ou 2, dans lequel le protocole de commande est le protocole UPnP.

4. Entité réseau (16) reliant un premier et un second réseau (12, 11) ; ledit premier réseau comprenant un dispositif (14) à commander au moyen d'un protocole de commande et, ledit second réseau permettant à un terminal (13) de communiquer au moyen d'un protocole de communication ;
ledit dispositif étant adapté pour mettre en oeuvre au moins une application apte à être commandée à distance à travers le premier réseau, par une entité de commande (15) connectée au premier réseau, au moyen du protocole de commande ;
ladite entité réseau comprenant :
- une unité de réception (81) adaptée pour recevoir un message de commande (31) depuis le terminal conforme au protocole de communication, le message de commande n'étant pas conforme audit protocole de commande ;
- une unité de traduction (82) adaptée pour traduire ledit message de commande conforme au protocole de communication en un message de commande traduit (32) conforme au protocole de commande adapté pour commander ladite au moins une application ;
- une unité d'émission (83) adaptée pour émettre, à destination de ladite entité de commande, le message de commande traduit.

5. Entité réseau (16) selon la revendication 4, dans laquelle l'unité de réception (81) est en outre adaptée pour recevoir un message d'information conforme au protocole de commande contenant une information relative au dispositif (14) depuis ledit dispositif, l'unité de traduction (82) est en outre adaptée pour traduire ledit message d'information en un message d'information traduit conforme au protocole de communication ; et l'unité d'émission (83) est en outre adaptée pour émettre à destination du terminal (13) le message d'information traduit.

6. Système de commande d'au moins un dispositif (14) appartenant à un premier réseau (12), ledit dispositif étant à commander à partir d'un terminal (13) apte à communiquer au travers d'un second réseau (11) au moyen d'un protocole de communication ;
lesdits premier et second réseaux étant reliés via une entité réseau (16) selon la revendication 5 ;
ledit dispositif étant adapté pour mettre en oeuvre au moins une application apte à être commandée à distance à travers le premier réseau, par une entité de commande (15) selon la revendication 7, au moyen d'un protocole de commande.

7. Programme d'ordinateur destiné à être installé dans une entité réseau (16) selon la revendication 4, comprenant des instructions aptes à mettre en oeuvre le procédé selon la revendication 1, lors d'une exécution du programme par des moyens de traitement de l'entité réseau.

## Patentansprüche

1. Verfahren zur Steuerung mindestens einer Vorrichtung (14), die einem ersten Netz (12) angehört, von einem Endgerät (13) aus, das geeignet ist, über ein zweites Netz (11) mittels eines Kommunikationsprotokolls zu kommunizieren;
wobei die Vorrichtung dazu vorgesehen ist, mindestens eine Anwendung einzusetzen, die über das erste Netz von einer Steuereinheit (15), die an das erste Netz angeschlossen ist, mittels eines Steuerprotokolls ferngesteuert werden kann;
wobei das Verfahren die folgenden Schritte umfasst, die durch eine Netzeinheit (16), die das erste und das zweite Netz verbindet, eingesetzt werden:
/1/ vom Endgerät Empfang eines Steuerbefehls (31) gemäß dem Kommunikationsprotokoll, wobei der Steuerbefehl nicht dem Steuerprotokoll entspricht;
/2/ Übersetzung des Steuerbefehls in einen übersetzten Steuerbefehl (32) gemäß dem Steuerprotokoll, der vorgesehen ist, die Anwendung zu steuern;
/3/ Entsenden des übersetzten Steuerbefehls an die Steuereinheit.

2. Steuerverfahren nach Anspruch 1, ferner umfassend die folgenden Schritte hinsichtlich der Netzeinheit (16):
/i/ Empfang einer Informationsmeldung gemäß dem Steuerprotokoll, die eine Information über die Vorrichtung (14) enthält, von der Vorrichtung;
/ii/ Übersetzung der Informationsmeldung in eine übersetzte Informationsmeldung gemäß dem Kommunikationsprotokoll; und
/iii/Entsenden der übersetzten Informationsmeldung an das Endgerät (13) .

3. Steuerverfahren nach Anspruch 1 oder 2, bei dem das Steuerprotokoll das UPnP-Protokoll ist.

4. Netzeinheit (16), die ein erstes und ein zweites Netz (12, 11) verbindet; wobei das erste Netz eine mittels eines Steuerprotokolls zu steuernde Vorrichtung (14) umfasst und das zweite Netz einem Endgerät (13) ermöglicht, mittels eines Kommunikationsprotokolls zu kommunizieren;
wobei die Vorrichtung dazu vorgesehen ist, mindestens eine Anwendung einzusetzen, die geeignet ist, über das erste Netz von einer Steuereinheit (15), die an das erste Netz angeschlossen ist, mittels des Steuerprotokolls ferngesteuert zu werden;
wobei die Netzeinheit Folgendes umfasst:
- eine Empfangseinheit (81), die dazu vorgesehen ist, einen Steuerbefehl (31) gemäß dem Kommunikationsprotokoll von dem Endgerät zu empfangen, wobei der Steuerbefehl nicht dem Steuerprotokoll entspricht;
- eine Übersetzungseinheit (82), die dazu vorgesehen ist, den Steuerbefehl gemäß dem Kommunikationsprotokoll in einen übersetzten Steuerbefehl (32) gemäß dem Steuerprotokoll zu übersetzen, der vorgesehen ist, die mindestens eine Anwendung zu steuern;
- eine Sendeeinheit (83), die dazu vorgesehen ist, den übersetzten Steuerbefehl an die Steuereinheit zu senden.

5. Netzeinheit (16) nach Anspruch 4, bei der die Empfangseinheit (81) ferner dazu vorgesehen ist, eine Informationsmeldung gemäß dem Steuerprotokoll von der Vorrichtung zu empfangen, die eine Information über die Vorrichtung (14) enthält, wobei die Übersetzungseinheit (82) ferner dazu vorgesehen ist, die Informationsmeldung in eine übersetzte Informationsmeldung gemäß dem Kommunikationsprotokoll zu übersetzen; und wobei die Sendeeinheit (83) ferner dazu vorgesehen ist, die übersetzte Informationsmeldung an das Endgerät (13) zu senden.

6. Steuersystem für mindestens eine Vorrichtung (14), die einem ersten Netz (12) angehört, wobei die Vorrichtung von einem Endgerät (13) aus zu steuern ist, das geeignet ist, über ein zweites Netz (11) mittels eines Kommunikationsprotokolls zu kommunizieren;
wobei das erste und das zweite Netz über eine Netzeinheit (16) nach Anspruch 5 verbunden sind;
wobei die Vorrichtung dazu vorgesehen ist, mindestens eine Anwendung einzusetzen, die geeignet ist, über das erste Netz von einer Steuereinheit (15) nach Anspruch 7 mittels eines Steuerprotokolls ferngesteuert zu werden.

7. Computerprogramm, das dazu bestimmt ist, in einer Netzeinheit (16) nach Anspruch 4 installiert zu werden, umfassend Befehle, die geeignet sind, das Verfahren nach Anspruch 1 bei einer Ausführung des Programms durch Bearbeitungsmittel der Netzeinheit einzusetzen.

## Claims

1. Method for controlling at least one device (14) belonging to a first network (12), from a terminal (13) capable of communicating through a second network (11) by means of a communication protocol; said device being suitable for implementing at least one application capable of being controlled remotely through the first network, by a control entity (15) connected to the first network, by means of a control protocol;
said method comprising the following steps, implemented by a network entity (16) linking said first and second networks:
/1/ receiving, from the terminal, a control message (31) conforming to said communication protocol, the control message not conforming to said control protocol;
/2/ translating said control message into a translated control message (32) conforming to said control protocol and suitable for controlling said application;
/3/ sending, to said control entity, the translated control message.

2. Control method according to Claim 1, also comprising the following steps on the network entity (16):
/i/ receiving an information message conforming to the control protocol containing information concerning the device (14) from said device;
/ii/ translating said information message into a
translated information message conforming to the communication protocol; and
/iii/ sending the translated information message
to the terminal (13).

3. Control method according to Claim 1 or 2, in which the control protocol is the UPnP protocol.

4. Network entity (16) linking a first and second network (12, 11); said first network comprising a device (14) to be controlled by means of a control protocol and said second network enabling a terminal (13) to communicate by means of a communication protocol;
said device being suitable for implementing at least one application capable of being controlled remotely through the first network, by a control entity (15) connected to the first network, by means of the control protocol;
said network entity comprising:
- a reception unit (81) suitable for receiving from the terminal a control message (31) conforming to the communication protocol, the control message not conforming to said control protocol;
- a translation unit (82) suitable for translating said control message conforming to the communication protocol into a translated control message (32) conforming to the control protocol suitable for controlling said at least one application;
- a sending unit (83) suitable for sending, to said control entity, the translated control message.

5. Network entity (16) according to Claim 4, in which the reception unit (81) is also suitable for receiving from said device an information message conforming to the control protocol containing information concerning the device (14), the translation unit (82) is also suitable for translating said information message into a translated information message conforming to the communication protocol; and the sending unit (83) is also suitable for sending the translated information message to the terminal (13).

6. System for controlling at least one device (14) belonging to a first network (12), said device having to be controlled from a terminal (13) capable of communicating through a second network (11) by means of a communication protocol;
said first and second networks being linked via a network entity (16) according to Claim 5;
said device being suitable for implementing at least one application capable of being controlled remotely through the first network, by a control entity (15) according to Claim 7, by means of a control protocol.

7. Computer program intended to be installed in a network entity (16) according to Claim 4, comprising instructions capable of implementing the method according to Claim 1, when the program is executed by processing means of the network entity.
